(19) Europäisches Patentamt
European Patent Office
Office européen des brevets

(11) **EP 3 171 284 A1**

(12) **DEMANDE DE BREVET EUROPEEN**

(43) Date de publication:
**24.05.2017 Bulletin 2017/21**

(51) Int Cl.:
***G06F 17/30*** *(2006.01)*

(21) Numéro de dépôt: **16199351.4**

(22) Date de dépôt: **17.11.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **18.11.2015 FR 1502417**

(71) Demandeur: **BULL SAS**
**78340 Les Clayes sous Bois (FR)**

(72) Inventeur: **DUFOURCQ, Matthieu**
**13290 Les Milles (FR)**

(74) Mandataire: **Cabinet Camus Lebkiri**
**25 rue de Maubeuge**
**75009 Paris (FR)**

(54) **PROCÉDÉ DE MISE À JOUR D'UN ENREGISTREMENT DANS UNE BASE DE DONNÉES PAR UN DISPOSITIF DE TRAITEMENT DE DONNÉES**

(57)    Procédé de mise à jour d'un enregistrement dans une base de données par un dispositif de traitement de données configuré pour la mise en oeuvre d'une application de traitement d'enregistrements, l'enregistrement ayant une structure comportant une pluralité de champs prédéterminée dans la base de données, l'enregistrement étant accédé par l'application via une modélisation selon un langage objet dans lequel la structure d'un enregistrement est modélisé par une classe, chaque champs de l'enregistrement correspond à une méthode de la classe, caractérisé en ce que le procédé comporte les étapes suivantes pour chaque méthode :
- Analyse 2030 de la déclaration de la méthode telle que connue au lancement de l'application pour trouver au moins une annotation prédéterminée ;
- Si l'annotation prédéterminée est trouvée, alors analyse des paramètres de l'annotation pour produire 2040 un contrôle de saisie ;
- Utilisation 2050 du contrôle produit pour la création d'une interface homme machine permettant la saisie et ou l'affichage de données, via le dispositif de traitement de données, pour la mise à jour de l'enregistrement.

Fig. 2

## Description

## Domaine technique de l'invention

La présente invention a pour objet un procédé de mise à jour d'un enregistrement dans une base de données par un dispositif de traitement de données.

Dans le présent document une base de données est assimilable à mémoire structurée. Il s'agit donc d'un procédé pour mettre à jour un enregistrement dans une mémoire. Dans le présent document, la mise à jour inclut au moins la création et la modification.

## Etat de la technique antérieur

Dans l'état de la technique on connaît des applications configurées pour la manipulation d'enregistrements dans des bases de données. Les opérations de manipulations sont classiquement désignées par l'acronyme CRUD pour :

- C : « Create » soit Création ;
- R : « Read » pour lecture ;
- U : « Update » pour mise à jour mise à jour ;
- R : « Read » pour lecture.

Ces opérations sont réalisées via des interfaces homme machine, ou IHM, permettant :

- La restitution visuelle par des contrôles de saisie/visualisation (boîte de texte, case à cocher, boîte à liste,...) ;
- L'activation de commandes via des contrôles activateurs (bouton, lien, évènement,...)

La mise en oeuvre d'une telle IHM participe donc à la chaîne de moyens permettant la mise à jour d'enregistrements dans une base de données ou plus généralement à la manipulation d'enregistrements que les dits enregistrement soit persistés en base de données ou non.

Une telle IHM est produite par l'exécution de code instruction par un dispositif de traitement de données. Une IHM est un ensemble de formulaires. Un formulaire organise des contrôles de saisie et des contrôles activateurs. Ce code instruction définit explicitement, pour chaque type d'enregistrement, un formulaire. En d'autres termes il y a, dans le code instruction correspondant à l'application, au moins autant d'instructions de création de formulaire qu'il y a de type d'enregistrement à gérer. Chaque instruction de création de formulaire est accompagnée d'une pluralité d'instructions de création de contrôle de saisie, d'instructions de positionnement de contrôle de saisie, d'instructions de configuration de contrôle de saisie.

La taille du code de manipulation d'enregistrement dépend donc du nombre de type d'enregistrement que doit prendre en charge l'application. Pour pouvoir mettre à jour des enregistrements ce code de manipulation doit être produit et maintenue. Hors plus la taille d'un code, en nombre de lignes, est importante, plus il est long et délicat à produire et à maintenir. Ainsi les applications permettant de manipuler un grand nombre de types d'enregistrement sont compliquées à produire et, quand elles le sont, peuvent avoir des comportements erronés.

Dans l'état de la technique on connaît des outils d'échafaudage de code (aussi connu sous le nom de scaffolding) qui produisent automatiquement le code de base à partir d'une description d'une base de données. C'est-à-dire, si une base de données comporte N types d'enregistrement, alors l'outil d'échafaudage va proposer du code correspondant à N formulaires. Il est alors en théorie possible de produire l'application directement à partir de ce code échafaudé automatiquement.

Un tel code échafaudé, s'il peut être produit rapidement, n'en reste pas moins de taille important et donc produit un exécutable de taille lui aussi importante. Le code échafaudé est aussi très difficile à maintenir. En effet si le code échafaudé est personnalisé, et si la base de données évolue, alors on ne peut plus faire appel à l'échafaudage sans risquer de perdre les personnalisations. Par personnalisation de code on entend des modifications apportées au code échafaudé. Ce raisonnement s'applique aussi en l'absence d'une base de données si la structure des données manipulées par l'application évolue.

Ces outils sont, dans la pratique, utilisés pour la réalisation rapide de maquette. Pour les raisons exposées ci-dessus ils ne sont pas utilisés pour la production d'application destinées à être mise en production auprès du publique, surtout pas si le publique visé est très exigeant sur la qualité du code, comme par exemple des publiques de type militaire.

## Exposé de l'invention

Dans l'invention on résout ces problèmes proposant un mode de mise en oeuvre basée sur une production automatisée de formulaire à partir d'annotations de code. On peut ainsi factoriser le code correspondant à la production de formulaire au niveau des annotations qui sont partagées par les types.

On obtient ainsi une application courte et facilement maintenable qui permet d'étendre le nombre de type pris en charge sans avoir à produire de code correspondant à une interface de mise à jour.

Dans ce dessein l'invention a pour objet un procédé de mise à jour d'un enregistrement dans une base de données par un dispositif de traitement de données configuré pour la mise en oeuvre d'une application de traitement d'enregistrements, l'enregistrement ayant une structure comportant une pluralité de champs prédéterminée dans la base de données, l'enregistrement étant accédé par l'application via une modélisation selon un langage objet dans lequel la structure d'un enregistrement est modélisé par une classe, chaque champs de l'enregistrement correspond à une méthode de la classe, caractérisé en ce que le procédé comporte les étapes suivantes pour chaque méthode :

- Analyse de la déclaration de la méthode telle que connue au lancement de l'application pour trouver au moins une annotation prédéterminée ;
- Si l'annotation prédéterminée est trouvée, alors analyse des paramètres de l'annotation pour produire un contrôle de saisie ;
- Utilisation du contrôle produit pour la création d'une interface homme machine permettant la saisie et ou l'affichage de données, via le dispositif de traitement de données, pour la mise à jour de l'enregistrement.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :

- un paramètre de l'annotation prédéterminée permet d'ordonner les méthodes de la classe ;
- un paramètre de l'annotation prédéterminée permet de définir le type du contrôle de saisie ;
- le type de contrôle est parmi la liste formée d'au moins : texte, case à cocher, zone de liste ;
- un paramètre de l'annotation prédéterminée permet de définir un libellé pour le contrôle de saisie ;
- un paramètre de l'annotation prédéterminée permet de désigner une liste de valeurs possibles pour le contrôle de saisie ;
- une annotation cible une méthode ou un type ;
- une annotation ciblant un type comporte un paramètre de désignation de méthodes ciblées par l'annotation ;
- pour une annotation ciblant un type un paramètre est une liste de valeurs chaque valeur étant associée à une méthode selon son ordre d'apparition et l'ordre des désignations dans le paramètre de désignation

L'invention a aussi pour objet un dispositif de stockage numérique comportant un ou des fichiers correspondant à des codes instructions mettant en oeuvre le procédé selon une combinaison possible des caractéristiques précédentes.

L'invention a encore comme objet un dispositif mettant en oeuvre un procédé selon une combinaison possible des caractéristiques précédentes.

**Brève description des figures**

D'autres caractéristiques et avantages de l'invention ressortiront à la lecture de la description qui suit, en référence aux figures annexées, qui illustrent :

- la figure 1, une illustration d'une architecture permettant la mise en oeuvre de l'invention ;

- la figure 2, une illustration d'étapes du procédé selon l'invention mis en oeuvre par une application de traitement d'enregistrements.

Pour plus de clarté, les éléments identiques ou similaires sont repérés par des signes de référence identiques sur l'ensemble des figures.

L'invention sera mieux comprise à la lecture de la description qui suit et à l'examen des figures qui l'accompagnent. Celles-ci sont présentées à titre indicatif et nullement limitatif de l'invention.

**Description détaillée d'un mode de réalisation**

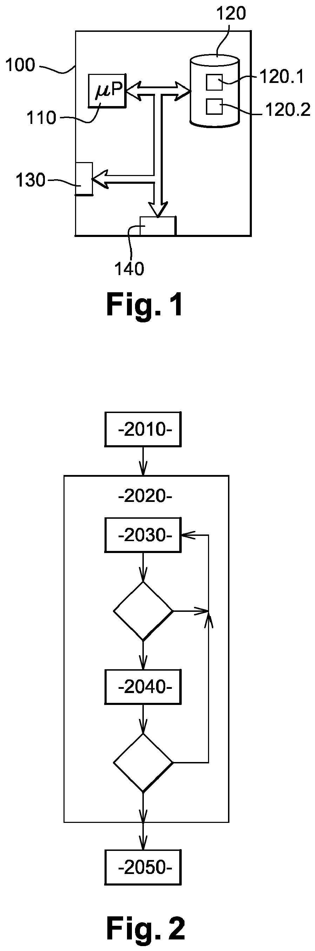

La figure 1 montre un dispositif 100 de traitement de données. Le dispositif de traitement de données comporte :

- un microprocesseur 110 ;
- des moyens de stockage 120, par exemple un disque dur qu'il soit local ou distant, qu'il soit simple ou en grille (par exemple RAID). Les moyens de stockage comportent :

  • une zone 120.1 comportant des codes instructions pour la mise en oeuvre de l'invention, c'est-à-dire des codes instruction d'une application de traitement d'enregistrement;
  • une zone 120.2 d'enregistrements configurée pour permettre la sauvegarde de données structurées.

- une interface 130 de communication, par exemple une carte de communication selon le protocole Ethernet. D'autres protocoles sont envisageables comme IP, « Fibre Channel » ou InfiniBand ;
- une interface 140 vidéo, par exemple une carte vidéo configurée pour être connectée à un écran. Un tel écran peut aussi servir de périphérique d'entrée en étant tactile.

La zone 120.2 d'enregistrement est la zone mémoire cible de l'interface homme machine produite par l'invention. C'est la zone qui est lue et écrite. Il peut s'agir d'une base de données au sens stricte, ou d'une zone d'échange partagée par plusieurs processus. Par exemple une telle zone est modifié via l'interface homme machine produite selon l'invention, puis le contenu de ladite zone est utilisé par un processus d'émission de message.

Le microprocesseur 110 du dispositif de traitement de données, les moyens 120 de stockage du dispositif de traitement de données et l'interface 130 de communication du dispositif de traitement de données sont interconnectés par un bus 150.

Pour l'invention un dispositif de traitement de données est, par exemple, un ordinateur individuel fixe ou portable, un téléphone intelligent ou une tablette.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de ladite application. Un message comporte au moins un champ adresse de destination, un champ d'adresse d'émetteur et une charge utile. Ces principes sont applicables que le dispositif soit réel ou virtuel.

Pour le dispositif de traitement on ne représente que les éléments impliqué directement dans la mise en oeuvre de l'invention. En particulier les périphériques d'entrée sortie ne sont pas représentés.

La figure 2 montres une étape 2010 préliminaire dans laquelle un utilisateur du dispositif de traitement de données manifeste sa volonté de manipuler un enregistrement d'un certain type, le type étant choisi parmi une liste prédéterminée présente dans l'application de traitement d'enregistrements. Cette liste est établie par déclaration au moment de la programmation de l'application. Dans l'étape 2010 préliminaire l'utilisateur désigne un type d'enregistrement.

Le type désigné lors de l'étape préliminaire 2010 est utilisé pour la production d'une interface homme machine. Le type désigné est utilisée dans une boucle 2020 qui se répète pour chaque méthode du type désigné.

On rappel ici qu'un enregistrement est formé par une pluralité de champs. Dans l'invention un enregistrement est associé à un type que l'on appelle type enregistrement, chaque champ étant associé à une méthode du type.

Par exemple, pour un champ, exposé via une méthode, l'accesseur (aussi appelé getter) et le mutateur (aussi appelé setter) sont obtenus via le type retourné par la méthode. Une méthode d'une classe utilisée pour modéliser un champ d'un enregistrement a une signature ressemblant à:

TypeGénérique<Type> nomMethode()

Dans cette signature « TypeGénérique » est un type exposant un mutateur et un accesseur, « Type » est un type d'une donnée ou champ. Un Type d'une donnée ou un type de champ est, par exemple : texte, date, temps, coordonnée, nombre,...

Ici exposé signifie que sa valeur est rendu disponible en lecture et/ou en écriture.

Les étapes de la boucle 2020 sont réalisées pour chaque méthode du type sélectionnée lors de l'étape préliminaire. La liste de des méthodes est obtenue par réflexion sur le type.

La figure 1 montre que la boucle 2020 comporte une étape 2030 d'analyse de la déclaration de la méthode. Cette déclaration est celle qui a été écrite au moment de la conception de l'application et qui a été compilée au moment de cette production et qui est donc présente dans l'application. Il est possible d'accéder à cette déclaration par réflexion. Cette déclaration est donc connue au lancement de l'application, on dit aussi « connue au runtime ». L'application n'a pas besoin d'aller la chercher ailleurs, par exemple dans un fichier de configuration.

Cette déclaration est aussi forcément correcte puisqu'elle a dû être analysée par un compilateur pour permettre la production de l'application.

L'analyse de la méthode permet d'obtenir une liste d'annotations associées à la méthode lors de la conception de l'application. Selon un formalisme Java, une telle méthode s'écrit comme suit :

```
    @Form2(
      index = 8,
      label = "Nationalité",
      componentType = CT.combobox,
      enumType = {@DEnumTypeRestriction(type
= DEnumType.L105_2)},
      classesRestriction = {"GroundTrack",
"SeaTrack", "AirTrack"})
  TacticalObjectProperty<DEnum> nationality();
```

Dans cet exemple une méthode dont le nom est « nationality » est associée à une annotation dont le nom est « Form2 ».

Si une telle annotation est trouvée alors on passe à une étape 2040 de production d'un contrôle de saisie. Dans l'étape 2040 de production d'un contrôle de saisie on analyse des paramètres de l'annotation pour déterminer des caractéristiques du contrôle de saisi à produire.

L'exemple ci-dessus montre que l'annotation comporte les paramètres nommés suivants :

- « index » : un paramètre qui permet de définir dans quel ordre les contrôle produit doivent être positionnée dans un formulaire ;
- « label » : un paramètre qui permet de définir une légende pour le contrôle de saisie ;
- « componentType » : permet de définir le type de contrôle de saisi à produire.

Les types de contrôle de saisie les plus courants sont :

- boite de texte ;
- case à cocher ;
- zone de liste ;

- « enumType » : permet de définir une liste préexistant de valeur possible pour le contrôle de saisie ;
- « classesRestrictions » : permet de limiter l'usage d'une méthode à un type donné, ou à une liste de type. Cette restriction pour le cas dans lequel les annotations d'un type sont obtenus par héritage d'un autre type ou d'une interface, interface étant ici utilisé dans le sens informatique tu terme et correspond au mot clé Java « interface ».

Les noms des paramètres sont donnés à titre d'exemple.

Une valeur initiale d'un contrôle de saisie est déterminée par l'invocation de l'assesseur obtenu via la méthode analysée. On rappelle qu'un contrôle de saisie est un concept connu et qu'un tel contrôle permet à un utilisateur de visualiser ou de saisir une valeur.

Tant qu'il reste des méthodes à analyser, on reste dans la boucle. Puis on passe à une étape 2050 de création d'une interface homme machine.

Dans l'étape 2050 on ordonne les contrôles de saisies produits au cours de la boucle 2020 pour produire un formulaire qui est affiché pour permettre à l'utilisateur de manipuler l'enregistrement.

Le formulaire comporte aussi des contrôles de type bouton pour déclencher des actions CRUD.

Avec cette invention la production d'un formulaire se fait donc via une fonction qui prend un type comme paramètre. Cette fonction analyse ce type pour y découvrir des annotations liées à la production d'un formulaire de saisie. Les dites annotations sont définis à la production de l'application. L'application ne peut donc être produite que si les annotations sont validées par l'environnement de production de l'application. Dans l'invention il n'y a donc pas de risque ou d'erreur liée à une erreur dans des paramètres de lancement.

Une fois cette fonction validée, on peut ajouter autant de type d'enregistrement que l'on veut, les formulaires qui en résulteront seront exempts d'erreur.

Le type analysé est obtenu par réflexion sur une instance d'une classe du type sélectionnée à l'étape préliminaire. Une instance d'un type est une zone mémoire dont le contenu est interprété selon le type de l'instance. Cette instance peut être obtenue, par exemple :

- Allocation simple d'un objet par une utilisation direct d'un allocateur, dans le cas de Java le mot clé « new » ;
- Utilisation d'un ORM (Object - Relational Mapping, pour association objet - relationnel) qui est un outil permettant de faire le lien entre une base de données et une modélisation objet.

On vient de décrire une mise en oeuvre de l'invention avec des annotations ciblant des méthodes. Il est également possible de mettre l'invention en oeuvre en utilisant des annotations ciblant un type.

Par exemple, l'extrait de code suivant :

```
    @Form1 (indexes = {3}, methods =
{FLM.isHuman},
        classesRestriction = {"GroundTrack",
"SeaTrack", "AirTrack"})
    public interface Track<T extends Track<T>>
extends TacticalObject<T> {
        @Form2(
            index = 8,
            label = "Nationalité",
            componentType = CT.combobox,
        enumType = {@DEnumTypeRestriction(type
= DEnumType.L105_2)},
        classesRestriction = {"GroundTrack",
"SeaTrack", "AirTrack"})
        TacticalObjectProperty<DEnum>
nationality();
        TacticalObjectProperty<Boolean>
isHuman();
    }
```

Illustre le fait que les annotations pour une méthode, ici « isHuman » d'un type, peuvent être attribuée via le type.

Cela signifie qu'à l'étape 2030 d'analyse de déclaration de la méthode, on inspecte aussi la déclaration du type pour déterminer si le type comporte des annotations ciblant la méthode.

Dans l'invention cette détermination de cible d'une annotation de type se fait via le paramètre de désignation nommé, pour l'exemple, « methods ». Le paramètre de désignation comporte une liste de méthodes cibles de l'annotation de type.

L'annotation de type comporte d'autre paramètres qui sont eux aussi des listes de valeurs. Pour une méthode donnée, on détermine un indice de position dans la liste du paramètre de désignation. Une fois cet indice de position connu, on l'utilisera avec les autres paramètres de l'annotation de type pour déterminer les valeurs de paramètre correspondant à la méthode.

Ainsi si une méthode a un indice I dans la liste de valeurs du paramètre de désignation, alors la valeur du paramètre de méthode « index » pour cette méthode sera la valeur située à l'indice I dans la liste de valeurs du paramètre de type nommée « indexes ». Ici on utilise une convention de pluralisation pour associer un paramètre d'une annotation de type à un paramètre d'une annotation de méthode. On peut utiliser d'autres stratégies pour réaliser cette association. Par exemple une association codée de manière statique avec une expression conditionnelle :

Si le paramètre de type s'appelle XXX alors cela correspond au paramètre de méthode YYY.

Dans cette description on s'est appuyé sur Java pour les exemples, mais l'invention reste valable avec d'autres langages comme C# ou delphi qui permettent la décoration du code avec des annotations.

**Revendications**

1. Procédé de mise à jour d'un enregistrement dans une base de données par un dispositif de traitement de données configuré pour la mise en oeuvre d'une application de traitement d'enregistrements, l'enregistrement ayant une structure comportant une pluralité de champs prédéterminée dans la base de données, l'enregistrement étant accédé par l'application via une modélisation selon un langage objet dans lequel la structure d'un enregistrement est modélisé par une classe, chaque champs de l'enregistrement correspond à une méthode de la classe, **caractérisé en ce que** le procédé comporte les étapes suivantes pour chaque méthode :

   - Analyse 2030 de la déclaration de la méthode telle que connue au lancement de l'application pour trouver au moins une annotation prédéterminée ;
   - Si l'annotation prédéterminée est trouvée, alors analyse des paramètres de l'annotation pour produire 2040 un contrôle de saisie ;
   - Utilisation 2050 du contrôle produit pour la création d'une interface homme machine permettant la saisie et ou l'affichage de données, via le dispositif de traitement de données, pour la mise à jour de l'enregistrement.

2. Procédé de mise à jour d'un enregistrement dans une base de données selon la revendication 1 **caractérisé en ce qu'**un paramètre de l'annotation prédéterminée permet d'ordonner les méthodes de la classe.

3. Procédé de mise jour d'un enregistrement dans une base de données selon l'une des revendications précédentes, **caractérisé en ce qu'**un paramètre de l'annotation prédéterminée permet de définir le type du contrôle de saisie.

4. Procédé de mise à jour d'un enregistrement dans une base de données selon la revendication précédente, caractérisé en que le type de contrôle est parmi la liste formée d'au moins : boite de texte, case à cocher, zone de liste.

5. Procédé de mise à jour d'un enregistrement dans une base de données selon l'une des revendications précédentes, **caractérisé en ce qu'**un paramètre de l'annotation prédéterminée permet de définir un libellé pour le contrôle de saisie.

6. Procédé de mise à jour d'un enregistrement dans une base de données selon l'une des revendications précédentes, **caractérisé en ce qu'**un paramètre de l'annotation prédéterminée permet de désigner une liste de valeurs possibles pour le contrôle de saisie.

7. Procédé de mise à jour d'un enregistrement dans une base de données selon l'une des revendications précédentes, **caractérisé en ce qu'**une annotation cible une méthode ou un type.

8. Procédé de mise à jour d'un enregistrement dans une base de données selon l'une des revendications précédentes, **caractérisé en ce qu'**une annotation ciblant un type comporte un paramètre de désignation de méthodes ciblées par l'annotation.

9. Procédé de mise à jour d'un enregistrement dans une base de données selon la revendication 8 **caractérisé en ce que**, pour une annotation ciblant un type un paramètre est une liste de valeurs chaque valeur étant associée à une méthode selon son ordre d'apparition et l'ordre des désignations dans le paramètre de désignation.

10. Dispositif de stockage numérique comportant un ou des fichiers correspondant à des codes instructions mettant en oeuvre le procédé selon l'une des revendications précédentes.

11. Dispositif mettant en oeuvre le procédé selon l'une des revendications 1 à 9.

**Fig. 1**

**Fig. 2**

Europäisches
Patentamt

European
Patent Office

Office européen
des brevets

**RAPPORT DE RECHERCHE EUROPEENNE**

Numéro de la demande

EP 16 19 9351

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | POLO M ET AL: "Generating three-tier applications from relational databases: a formal and practical approach", INFORMATION AND SOFTWARE TECHNOLOGY, ELSEVIER, AMSTERDAM, NL, vol. 44, no. 15, 1 décembre 2002 (2002-12-01), pages 923-941, XP004390163, ISSN: 0950-5849, DOI: 10.1016/S0950-5849(02)00130-1 * abrégé * * alinéa [4.3.3.] * * alinéa [005.] * * figure 9 * ----- | 1-11 | INV. G06F17/30 |
| X | Anonymous: "Generating a JavaServer Faces 2.0 CRUD Application from a Database - NetBeans IDE 6.8/6.9 Tutorial", , 19 juillet 2011 (2011-07-19), pages 1-22, XP055294395, Internet Extrait de l'Internet: URL:https://web.archive.org/web/2011071923 0242/http://netbeans.org/kb/docs/web/jsf20 -crud.html?print=yes [extrait le 2016-08-09] * pages 1,2,4 * * pages 7,10,17 * ----- | 1-11 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| Munich | 6 mars 2017 | Michalski, Stéphane |

EPO FORM 1503 03.82 (P04C02)